# EUROPEAN PATENT SPECIFICATION

(11) **EP 2 874 795 B1**
(45) Date of publication and mention of the grant of the patent: **23.12.2020**
(21) Application number: 13822286.4
(22) Date of filing: 23.07.2013
(51) Int. Cl.: B29C 49/20, B29C 65/70, B29C 70/72, B65D 1/02, B65D 1/42, B29L 31/00, B29K 23/00

(54) **MOULDED PRODUCT AND METHOD**
FORMKÖRPER UND VERFAHREN DAFÜR
PRODUIT MOULÉ ET PROCÉDÉ

(30) Priority: 23.07.2012 AU 2012903122
(43) Date of publication of application: 27.05.2015
(73) Proprietor: Mayborn (UK) Limited, Newcastle upon Tyne, NE12 8EW (GB)
(72) Inventor: REES, Arnold, Gosforth Newcastle upon Tyne NE3 5JA (GB)
(74) Representative: HGF
(86) International application number: PCT/AU2013/000808
(87) International publication number: WO 2014/015366

(56) References cited:
- WO-A1-2007/131244
- WO-A1-2011/082536
- GB-A- 1 119 855
- JP-A- 2000 334 818
- US-A1- 2008 057 242
- US-A1- 2008 057 242
- US-A1- 2008 110 774
- US-A1- 2008 110 774

## Description

### Field of the Invention

This invention broadly relates to a moulded product and to a method of making a moulded product.

### Background of the Invention

It is known to make moulded products by using injection moulding or blow moulding.

In blow moulding, a plastic material is heated to melt it and formed into a parison, generally a tube with an opening at one end. The parison is inserted into a mould and air is pumped into it, so that the soft plastic is expanded to conform to the shape of the mould. The plastic is then cooled and taken out of the mould.

In injection moulding, plastic material is heated to melt it and fed into a mould where it cools and conforms to the configuration of the mould, from which the moulded product is then removed.

It is known to make products using a combination of blow moulded and injection moulded components. The use of a combination may be desirable to provide different structural features to a finished product, or a convenient way to enable different colour or design features in the finished product.

When a product is to combine an injection moulded component and a blow moulded component, the injection moulded component may be formed first and then placed in the blow mould. The parison may then be inserted in the blow mould. After air is pumped into the blow mould, the parison should expand into the shape of the mould, contacting the injection moulded component. The finished product has the blow moulded component inside the injection moulded component.

A drawback with such a product having a blow moulded component and an injection moulded component can arise in that the contact between the blow moulded component and the injection moulded component may leave gaps between the components. This can be especially undesirable if the product is intended as, for example, a training cup for small children, since a child's small fingers may be trapped in the gaps and caused injury. Gaps can be undesirable for other items, even for adults, since lips, for example may be caught in gaps.

In addition, the interface between the blow moulded component and the injection moulded component may not be firm or secure and one may be movable with respect to the other. In severe cases, the product may fall apart, or be prised apart, the injection moulded component being separated from the blow moulded component.

It is an object of the present invention to provide a product which, at least in some embodiments, is capable of avoiding these problems, and of providing a method of making such a product.

US2008/0110774 A1 describes a plastic container having an open end and a container wall with a base, and outwardly open pocket in the container wall, and a RFID tag in the plastic housing disposed in the pocket.

US2008/0057242 A1 describes a dual texture article comprising at least two same or different polymers having same or different melt flowrates that cause co-moulding/ over-moulding of the polymers upon injection stretch blow-moulding.

JP2000334818 describes bonding a moulding part and an insert part together by forming a protrusion part adhering to an undercut part fitting to the moulding part on the bond surface of the insert part.

GB1119855 describes apparatus and method for the manufacture of containers of plastics material having reinforcements inserted into the mould before inflating the countainer.

### Summary of Invention

The invention is defined by the appended claims. Apparatuses or methods that are presented in the description but are not covered by the appended claims should be construed as examples that are useful for understanding the invention.

Accordingly, in a first aspect, the invention provides a moulded product according to claim 1.

In a second aspect, the present invention provides a method according to claim 8 .

In a third aspect, the present invention also provides a product made by the method of the invention.

In a fourth aspect, the present invention provides a moulded product having a first component and a second component. The first component is at least partially surrounding the second component, and the first component includes at least one aperture exposing the second component.

The first and second components may be made of any suitable plastic. Both may be made of the same material such as polyethylene or polypropylene, for example, or of different materials. Preferably, the first component is made by injection moulding, but the invention is not limited to this.

In the method of the invention, the second component is formed by inserting air into the parison, or blow moulding. The product of the invention in the first aspect is not limited to this method of manufacture, since technology may provide alternates in the future.

The method of the invention causes the second component to engage the first component by wrapping around the first component. Essentially, this may form the cavity in the interface of the first aspect of the invention, trapping the first component. In this way, the first component may be interlocked with the second component, ensuring that there are no undesirable gaps between the first and second components and also avoiding undesirable movement of one component with respect to the other.

The first and second components may take any desired shape, having regard to the purpose of the end product. The product of the first and third aspects may have more than one first component and/or more than one second component.

For convenience below, the invention will be described in more detail with reference to a training cup. However, it is to be understood that the invention is not limited to this example.

### Brief Description of the Drawings

Possible and preferred features of the present invention will now be described with particular reference to the accompanying drawings. However, it is to be understood that the features illustrated in and described with reference to the drawings are not to be construed as limiting on the scope of the invention as defined in the appended claims. In the drawings:
Figure 1 shows a side elevation of a first embodiment of a product according to the first and third aspects of the invention and made according to the second aspect of the invention;
Figure 2 shows an enlarged partial cross-sectional view, taken along the line X-X in Figure 1;
Figure 3 shows in enlarged partial cross-sectional view a variation of the view of Figure 2;
Figure 4 shows in enlarged partial cross-sectional view a second variation of the view of Figure 2;
Figure 5 shows in enlarged partial cross-sectional view a third variation of the view of Figure 2;
Figure 6 is a perspective view of the product of Figure 1;
Figures 7 to 12 each shows a side elevation of a further embodiment of a product according to the first and third aspects of the invention and made according to the second aspect of the invention; and
Figure 13 shows an enlarged partial cross-sectional view, taken along the line Y-Y of Figure 8 or Z-Z of Figure 7.

### Detailed Description of the Drawings

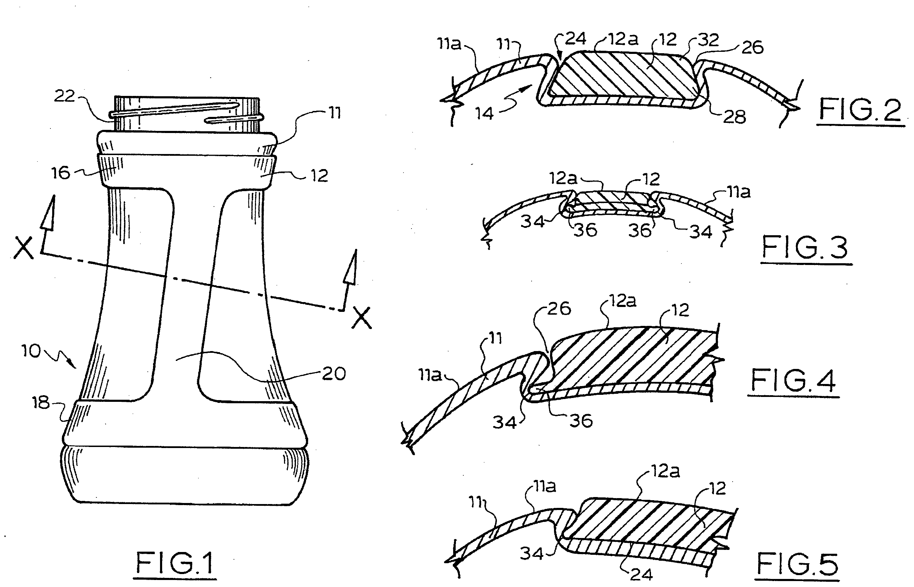

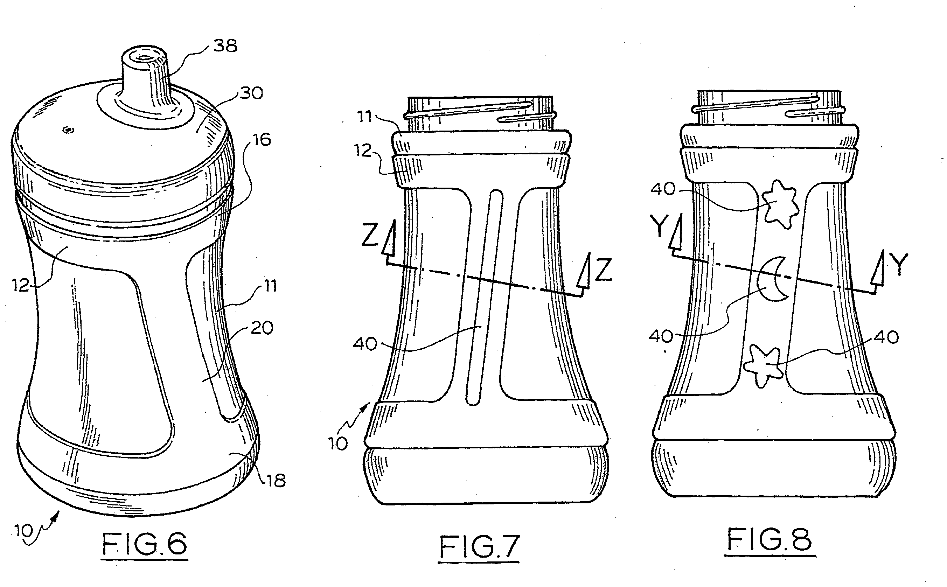

Referring first to Figure 1, training cup 10, shown here without its lid, is made of a single first component 12 and a single second component 11. Second component 11 is generally inside first component 12, except as provided by interface 14 (refer Figures 2 to 5). First component 12 in this embodiment has first and second circumferential rings 16 and 18, joined or fused by bar 20. Training cup 10 has a screw-threaded mouth 22, ready to accept a lid 30 (refer Figure 6).

As can be seen in Figure 2, interface 14 is formed between first component 12 and second component 11. The second component 11 includes a wall 11a defining cavity 24. In the Figure 2 embodiment, cavity 24 is generally trapezoidal in the illustration, being narrower at entrance 26. The cross-sectional shape of first component 12 generally echoes the cross-sectional shape of cavity 24, being received within it. First component 12 is wider at point 28 and narrower at point 32, so that first component 12 is trapped within cavity 24. In this embodiment, an outer surface 12a of first component 12 is generally flush with a portion of wall 11a at entrance 26, so that first component 12 and second component 11 present a relatively unbroken circumference in training cup 10.

In the variation in Figure 3, cavity 24 extends into ears 34 and first component 12 has corresponding extensions 36. In this embodiment, once again the outer surface 12a of first component 12 is generally flush with the portion of wall 11a at entrance 26.

In the variation in Figure 4, cavity 24 extends into ears 34 and first component 12 has corresponding extensions 36, as in Figure 3. However, in this embodiment, the outer surface 12a of first component 12 stands proud of entrance 26, so that first component 12 is more pronounced in training cup 10.

The variation in Figure 5 has similar ears 34 in cavity 24, but first component 12 more closely echoes the shape of cavity 24.

In each of the embodiments shown in Figures 2 to 5, first component 12 is trapped or locked within cavity 24.

In Figure 6, training cup 10 has lid 30 with drinking spout 38. In this embodiment, cup 10 is provided in two colours, being a lighter colour for first component 12 and a darker colour for second component 11. This may be a design feature, and/or first component 12 may provide structural strength to training cup 10.

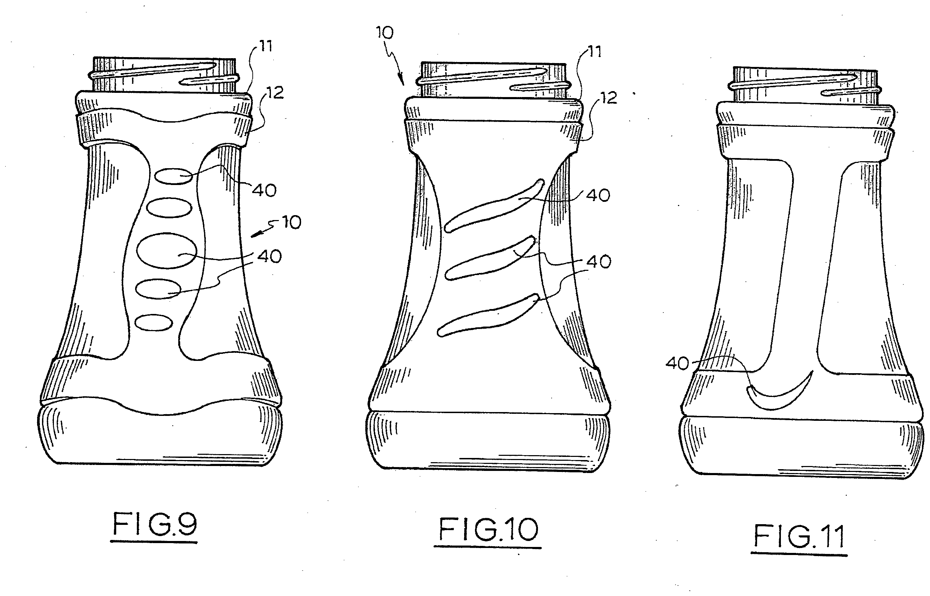

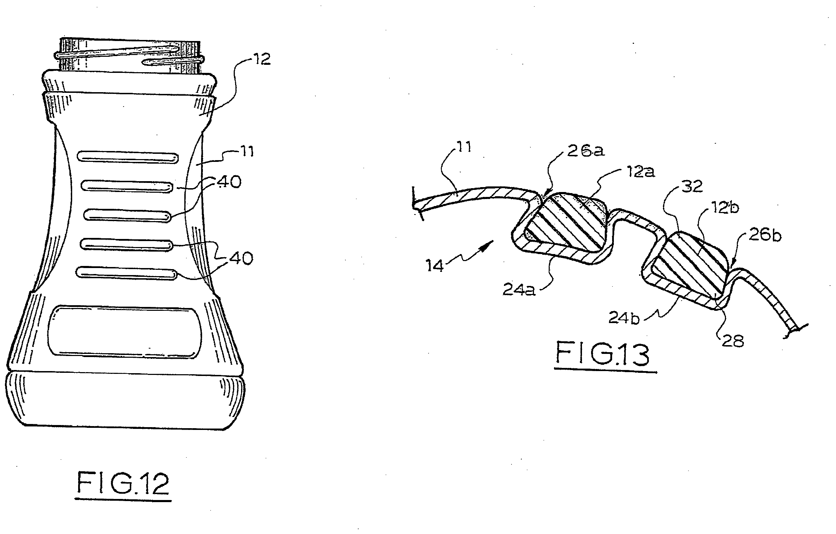

Figures 7 to 12 show further embodiments of cup 10. In each embodiment, there is a location 40 where second component 11 is visible within first component 12. Only some of locations 40 are labelled in Figures 9 and 12. In each case, location 40 may take two configurations.

The first configuration does not include the cavity described above with the narrow entrance. In this configuration, locations 40 represent a design features and do not provide any locking together of components 11 and 12.

In the second configuration, locations 40 do provide the entrapment of part of the first component 12 by the second component 11. An example is illustrated in Figure 13, which represents a cross-section along the line Z-Z in Figure 7 or Y-Y in Figure 8.

As can be seen in Figure 13, interface 14 has two cavities, 24a and 24b, each similar to cavity 24 in Figure 2. Each cavity 24a and 24b is generally trapezoid, being narrower at entrance 26a and 26b. The cross-sectional shape of first component 12 at 12a and 12b generally echoes the cross-sectional shape of cavity 24a and 24b respectively, being received within it. Each of first components 12a and 12b is wider at point 28 and narrower at point 32, so that each first component 12a and 12b is trapped within cavity 24a and 24b respectively. In this embodiment, first component parts 12a and 12b are generally flush with entrance 26a and 26b, so that first component 12 and second component 11 present a relatively unbroken circumference in training cup 10. However, as an alternative, parts 12a and 12b of first component 12 may be designed to stand proud of entrances 26a and 26b.

The method of manufacturing training cup 10 will now be described.

First component 12 is made by injection moulding in known manner, cooled and removed from its mould. First component 12 is then inserted into a mould for cup 10. The mould (not shown) is designed to produce either a cup 10 having a relatively smooth circumference, as in Figure 2, or a cup 10 in which first component 12 protrudes, as in Figure 4.

The cross-sectional shape of first component 12, being narrower at the end (point 32 in Figure 2) which will be on the outside of cup 10, but wider at the other end (point 28 in Figure 2), ensures that second component 11, when expanded, will at least partially wrap around first component 12.

The material for second component 11 is melted, formed as a parison and inserted into the mould, within first component 12. Air is pumped into the parison so that it expands and forms second component 11 and at least partially wraps around first component 12.

### Industrial Applicability

In particular, the invention provides a product particularly suitable for a training cup for small children and also for items wherein gaps may be undesirable.

## Claims

1. A moulded product (10) having:
a first component (12) having, in cross-section, a wide inner end (28) and a narrow outer end (32), such that the first component has a trapezoidal cross-sectional shape;and
a second component (11) engaging a portion of the first component (12) to form an interface (14) between the first and second components, wherein
the second component (11) includes a wall (11a) defining a cavity (24) having a wide interior and a narrow entrance, the portion of the first component (12) being received within the wide interior and being trapped at the narrow outer end by the narrow entrance to connect the first and second components;
such that the trapezoidal cross-sectional shape of the first component (12) allows the first component (12) to be trapped in the cavity (24).
and wherein the moulded product is **characterised in that** the first component (12) includes a top surface which is generally flush with a portion of the wall at the entrance of the cavity (24) so that the first component (12) and the second component (11) form a generally unbroken outer surface.

2. The moulded product of claim 1, wherein each of the first
and second components is chosen from polyethylene and polypropylene.

3. The moulded product of claim 1 or 2, wherein the first and second components are made of the same material.

4. The moulded product of any one of claims 1 to 3, wherein the first component (12) is formed by injection moulding.

5. The moulded product of any one of claims 1 to 4, wherein the second component (11) is formed by blow moulding.

6. The moulded product of any one of claims 1 to 5, wherein the first component has a cross-sectional shape corresponding to a cross-sectional shape of the cavity.

7. The moulded product of claim 6, wherein the moulded product is a drinking vessel having a circumference, the first component (12) including first and second circumferential rings (16, 18) fused by a bar (20).

8. A method of manufacturing a moulded product having a first component (12) and second component (11), the method including the steps of:
forming the first component such that the first component (12), in cross-section, has a wide inner end (28) and a narrow outer end (32), such that the first component has a trapezoidal cross-sectional shape;
providing a mould for the product, the mould being adapted to accommodate the first component (12) and to enable the second component (11) to engage the first component (12);
inserting the first component (12) into the mould;
inserting a parison into the mould within the first component (12); and
inserting air into the parison to form the second component;
wherein the trapezoidal cross-sectional shape of the first component (12) ensures that the second component (11), when expanded, will
at least partially wrap around the first component (12) such that the first component is interlocked with the second component ensuring that there are no undesirable gaps between the first and second components and wherein the first component (12) includes a top surface which is generally flush with a portion of the wall at the entrance of the cavity (24) so that the first component (12) and the second component (11) form a generally unbroken outer surface.

9. The method of claim 8, wherein each of the first and second components is chosen from polyethylene and polypropylene.

10. The method of claim 9, wherein the first and second components are made of the same material.

11. The method of any one of claims 8 to 10, wherein the first component (12) is made by injection moulding.

## Patentansprüche

1. Formkörper (10), aufweisend:
eine erste Komponente (12) mit, im Querschnitt, einem breiten inneren Ende (28) und einem schmalen äußeren Ende (32), so dass die erste Komponente eine trapezförmige Querschnittform aufweist; und
eine zweite Komponente (11), die einen Teil der ersten Komponente (12) in Eingriff nimmt, um eine Schnittfläche (14) zwischen der ersten und zweiten Komponente zu formen,
wobei die zweite Komponente (11) eine Wand (11a) enthält, die einen Hohlraum (24) mit einem breiten Inneren und einem engen Eingang definiert, wobei der Teil der ersten Komponente (12) im breiten Inneren aufgenommen wird und am engen äußeren Ende durch den engen Eingang eingeschlossen wird, um die erste und zweite Komponente zu verbinden;
so dass die trapezförmige Querschnittform der ersten Komponente (12) der ersten Komponente (12) ermöglicht, im Hohlraum (24) eingeschlossen zu werden,
und wobei der Formkörper **dadurch gekennzeichnet ist, dass** die erste Komponente (12) eine obere Oberfläche enthält, die allgemein bündig mit einem Teil der Wand am Eingang des Hohlraums (24) ist, so dass die erste Komponente (12) und die zweite Komponente (11) eine allgemein ungebrochene äußere Oberfläche formen.

2. Formkörper nach Anspruch 1, wobei jede der ersten und zweiten Komponenten aus Polyethylen und Polypropylen ausgewählt ist.

3. Formkörper nach Anspruch 1 oder 2, wobei die erste und zweite Komponente aus demselben Material sind.

4. Formkörper nach einem der Ansprüche 1 bis 3, wobei die erste Komponente (12) durch Spritzguss geformt ist.

5. Formkörper nach einem der Ansprüche 1 bis 4, wobei die zweite Komponente (11) durch Blasformen geformt ist.

6. Formkörper nach einem der Ansprüche 1 bis 5, wobei die erste Komponente eine Querschnittform aufweist, die einer Querschnittform des Hohlraums entspricht.

7. Formkörper nach Anspruch 6, wobei der Formkörper ein Trinkgefäß mit einem Umfang ist, wobei die erste Komponente (12) erste und zweite Umfangsringe (16, 18) enthält, die durch einen Stab (20) vereinigt sind.

8. Verfahren zum Herstellen eines Formkörpers mit einer ersten Komponente (12) und einer zweiten Komponente (11), wobei das Verfahren die folgenden Schritte enthält:
ein Formen der ersten Komponente, so dass die erste Komponente (12) im Querschnitt, ein breites inneres Ende (28) und ein schmales äußeres Ende (32) aufweist, so dass die erste Komponente eine trapezförmige Querschnittform aufweist;
ein Bereitstellen einer Form für das Produkt, wobei die Form angepasst ist, um die erste Komponente (12) aufzunehmen und der zweiten Komponente (11) zu ermöglichen, die erste Komponente (12) in Eingriff zu nehmen;
ein Einführen der ersten Komponente (12) in die Form;
ein Einführen eines Rohlings in die Form in der ersten Komponente (12); und
ein Einführen von Luft in den Rohling, um die zweite Komponente zu formen;
wobei die trapezförmige Querschnittform der ersten Komponente (12) sicherstellt, dass die zweite Komponente (11), wenn sie ausgedehnt ist, sich mindestens teilweise um die erste Komponente (12) wickelt, so dass die erste Komponente mit der zweiten Komponente verriegelt ist, wodurch sichergestellt wird, dass es zwischen der ersten und zweiten Komponente keine unerwünschten Spalte gibt, und wobei die erste Komponente (12) eine obere Oberfläche enthält, die allgemein bündig mit einem Teil der Wand am Eingang des Hohlraums (24) ist, so dass die erste Komponente (12) und die zweite Komponente (11) eine allgemein ungebrochene Außenoberfläche formen.

9. Verfahren nach Anspruch 8, wobei jede der ersten und zweiten Komponenten aus Polyethylen und Polypropylen ausgewählt ist.

10. Verfahren nach Anspruch 9, die erste und zweite Komponente aus demselben Material sind.

11. Verfahren nach einem der Ansprüche 8 bis 10, wobei die erste Komponente (12) durch Spritzguss geformt ist.

## Revendications

1. Produit moulé (10) comportant :
un premier composant (12) présentant, en coupe transversale, une extrémité interne large (28) et une extrémité externe étroite (32), de sorte que le premier composant présente une forme de section transversale trapézoïdale ; et
un second composant (11) s'engageant dans une partie du premier composant (12) pour former une interface (14) entre les premier et second composants,
ledit second composant (11) comprenant une paroi (11a) définissant une cavité (24) possédant un large intérieur et une entrée étroite, la partie du premier composant (12) étant reçue à l'intérieur du large intérieur et étant piégée au niveau de l'extrémité externe étroite par l'entrée étroite pour raccorder les premier et second composants ;
de sorte que la forme de section transversale trapézoïdale du premier composant (12) permette au premier composant (12) d'être piégé dans la cavité (24) ;
et dans laquelle le produit moulé est **caractérisé en ce que** le premier composant (12) comprend une surface supérieure qui affleure généralement une partie de la paroi au niveau de l'entrée de la cavité (24) de sorte que le premier composant (12) et le second composant (11) forment une surface externe généralement continue.

2. Produit moulé selon la revendication 1, chacun des premier et second composants étant choisi parmi le polyéthylène et le polypropylène.

3. Produit moulé selon la revendication 1 ou 2, lesdits premier et second composants étant constitués du même matériau.

4. Produit moulé selon l'une quelconque des revendications 1 à 3, ledit premier composant (12) étant formé par moulage par injection.

5. Produit moulé selon l'une quelconque des revendications 1 à 4, ledit second composant (11) étant formé par moulage par soufflage.

6. Produit moulé selon l'une quelconque des revendications 1 à 5, ledit premier composant présentant une forme en coupe transversale correspondant à une forme en coupe transversale de la cavité.

7. Produit moulé selon la revendication 6, ledit produit moulé étant un récipient à boire présentant une circonférence, le premier composant (12) comprenant des premier et second anneaux circonférentiels (16, 18) fusionnés par une barre (20).

8. Procédé de fabrication d'un produit moulé comportant un premier composant (12) et
un second composant (11), le procédé comprenant les étapes de :
formation du premier composant de sorte que le premier composant (12), en section transversale, présente une extrémité interne large (28) et une extrémité externe étroite (32), de sorte que le premier composant présente une forme de section transversale trapézoïdale ;
fourniture d'un moule pour le produit, le moule étant conçu pour recevoir le premier composant (12) et pour permettre au second composant (11) de s'engager dans le premier composant (12) ;
insertion du premier composant (12) dans le moule ;
insertion d'une paraison dans le moule à l'intérieur du premier composant (12) ; et
insertion d'air dans la paraison pour former le second composant ;
ladite forme de section transversale trapézoïdale du premier composant (12) garantissant que le second composant (11), lorsqu'il est déployé, s'enroulera au moins partiellement autour du premier composant (12) de sorte que le premier composant soit verrouillé avec le second composant en garantissant qu'il n'y ait pas d'espaces indésirables entre les premier et second composants et ledit premier composant (12) comprenant une surface supérieure qui affleure généralement une partie de la paroi au niveau de l'entrée de la cavité (24) de sorte que le premier composant (12) et le second composant (11) forment une surface externe généralement continue.

9. Procédé selon la revendication 8, chacun des premier et second composants étant choisi parmi le polyéthylène et le polypropylène.

10. Procédé selon la revendication 9, lesdits premier et second composants étant constitués du même matériau.

11. Procédé selon l'une quelconque des revendications 8 à 10, ledit premier composant (12) étant fabriqué par moulage par injection.
